# EUROPÄISCHE PATENTSCHRIFT

(11) **EP 1 769 174 B1**
(45) Veröffentlichungstag und Bekanntmachung des Hinweises auf die Patenterteilung: **21.07.2010**
(21) Anmeldenummer: 05747968.5
(22) Anmeldetag: 11.06.2005
(51) Int. Cl.: F16H 48/06

(54) **DIFFERENTIAL FÜR EINE FAHRZEUGACHSE**
DIFFERENTIAL FOR A VEHICLE AXLE
DIFFERENTIEL POUR ESSIEU DE VEHICULE

(30) Priorität: 17.07.2004 DE 102004034736
(43) Veröffentlichungstag der Anmeldung: 04.04.2007
(73) Patentinhaber: ZF Friedrichshafen AG, 88038 Friedrichshafen (DE)
(72) Erfinder: BÖCK, Alois, 94116 Hutthurm (DE)
(86) Internationale Anmeldenummer: PCT/EP2005/006282
(87) Internationale Veröffentlichungsnummer: WO 2006/007903

(56) Entgegenhaltungen:
- EP-A- 0 979 960
- DE-A1- 2 653 978
- US-A- 4 125 026
- US-A1- 2004 116 235

## Beschreibung

Die vorliegende Erfindung betrifft ein Differential für eine Fahrzeugachse gemäß dem Oberbegriff des Patentanspruchs 1.

Ausgleichsgetriebe bzw. Differentiale sind aus dem Stand der Technik bekannt. Sie ermöglichen eine unterschiedliche Drehzahl der Räder, beispielsweise bei einer Kurvenfahrt. Dazu wird üblicherweise über ein Kegeltrieb oder Stirntrieb der Differentialkorb angetrieben, welcher mit einem Tellerrad oder Stirnrad verbunden ist. Ferner sind zwei, bei Bedarf auch vier auf einen Bolzen bzw. Differentialkorb drehbar gelagerte Ausgleichsräder vorgesehen, welche mit den beiden Achskegelrädem kämmen, die mit den Antriebswellen fest verbunden sind, die mit einem Radkopf verbunden sind.

Im Fall von mehr als 2 Ausgleichskegelrädern oder zur Festigkeitssteigerung werden Differentialgehäuse üblicherweise 2-teilig ausgeführt, umfassend einen Differentialkorb und einen Differentialdeckel, und mit dem Tellerrad verschraubt. Durch die notwendige Verschraubung wird in nachteiliger Weise das Gewicht des Differentials sowie der erforderliche Bauraum erhöht.

Aus der US 4,125,026 ist ein Differential bekannt, bei dem das Tellerrad mit dem Differentialkorb und/oder dem Differentialdeckel über Elektronenstrahlschweißen verbunden ist, derart, dass eine Verschraubung vermieden wird. Hierbei ist für jede Verbindung eine Schweißnaht erforderlich.

Ein gattungsgemäßes Differential ist aus der US 2004/0116235 A1 bekannt.

Der vorliegenden Erfindung liegt die Aufgabe zugrunde, ein Differential anzugeben, welches im Vergleich zu den aus dem Stand der Technik bekannten Differentialen bezüglich der Herstellungskosten und des Gewichts optimiert ist. Insbesondere soll die Verbindung der Teile des Differentials verbessert werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Differential vorgeschlagen, bei dem der Differentialkorb mit dem Differentialdeckel und dem Tellerrad mit nur einer Radialschweißnaht verschweißt ist. Bevorzugterweise erfolgt die Verbindung über Laserschweißtechnik.

Gemäß der Erfindung ist der Differentialkorb derart ausgebildet, dass er mehrere Aussparungen an seinem Umfang im Flanschbereich der Tellerradanlage aufweist; der Differentialdeckei weist erfindungsgemäß den Aussparungen zugeordnete Segmente auf, welche in die Aussparungen des Differentialkorbs eingreifen, so dass der Differentialdeckel mit dem Tellerrad ebenfalls zur Anlage kommt.

Die Anzahl der Segmente/Aussparungen ist von Rahmenbedingungen, wie beispielsweise von der Festigkeitsbetrachtung, der Schweißtechnik, etc., abhängig und kann unter Berücksichtigung dieser Rahmenbedingungen beliebig gewählt werden. Die Segmente und Aussparungen sind vorzugsweise gießtechnisch ohne mechanische Bearbeitung hergestellt.

Durch die erfindungsgemäße Konzeption ist in vorteilhafter Weise nur ein Arbeitsgang zur Verbindung von Differentialkorb, Differentialdeckel und Tellerrad/Stirnrad notwendig. Ferner werden durch den Entfall der Verschraubung die Herstellungs- und Montagekosten reduziert. Außerdem wird durch den geringeren Materialeinsatz, da Gewinde und Schrauben entfallen, das Gewicht des Differentials reduziert.

Die Erfindung wird im Folgenden anhand der beigefügten Figuren beispielhaft näher erläutert. Es stellen dar:
- Figur 1: eine perspektivische schematische Darstellung der Ausge- staltung des Differentialkorbes und des Differentialdeckels gemäß der Erfindung; und
- Figur 2: eine schematische Schnittansicht eines erfindungsgemäßen Differentials.

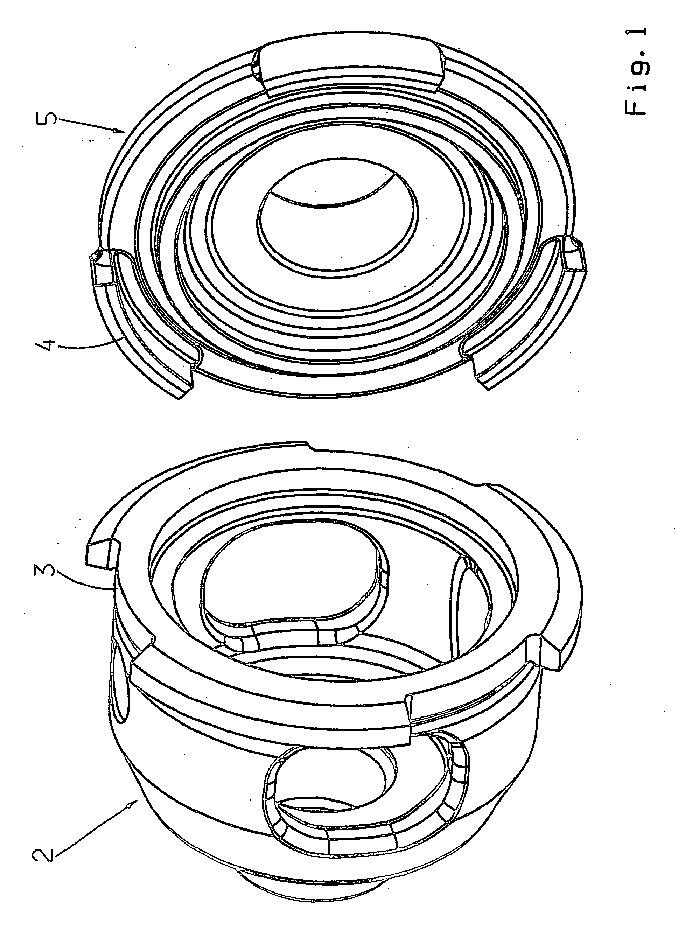

Gemäß Figur 1 weist der Differentialkorb 2 des erfindungsgemäßen Differentials 1 Aussparungen 3 an seinem Umfang im Flanschbereich der Tellerradanlage auf. Diese Aussparungen 3 dienen im zusammengesetzten bzw. montierten Zustand des Differentials der Aufnahme von Segmenten 4 des Differentialdeckels 5. Durch diese Konstruktion kommt sowohl der Differentialkorb 2 als auch der Differentialdeckel 5 mit dem in dieser Figur nicht dargestellten Tellerrad zur Anlage, so dass die Verbindung vom Differentialkorb 2 mit dem Differentialdeckel 5 und dem Tellerrad mit nur einer Radialschweißnaht erfolgen kann.

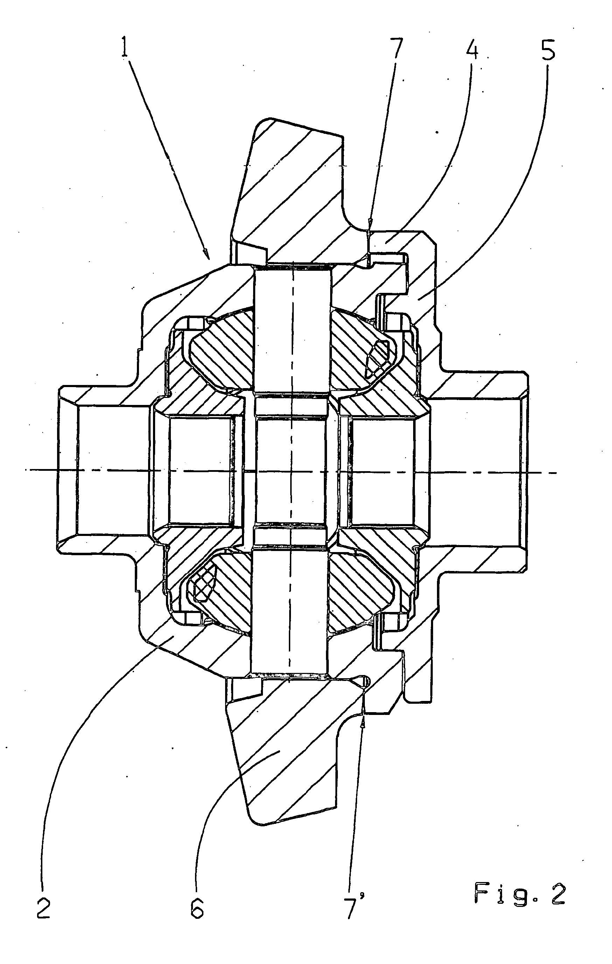

Gegenstand der Figur 2 ist das erfindungsgemäße Differential 1 im zusammengesetzten Zustand. Hierbei wird deutlich, dass die Verbindung von Differentialkorb 2, Differentialdeckel 5 und Tellerrad 6 miteinander über eine Radialschweißnaht 7, 7' erfolgt. Der im oberen Teil der Figur 2 gezeigte Teil 7 der Radialschwelßnaht verbindet ein Segment 4 des Differentialdeckels 5 mit dem Tellerrad 6 und der im unteren Teil der Figur 2 gezeigte Teil 7' oder Radialschweißnaht verbindet den Differentialkorb 2 mit dem Tellerrad 6.

Gemäß der Erfindung ist es auch möglich, dass der Differentialdeckel die Aussparungen aufweist, wobei in diesem Fall die Segmente am Differentialkorb vorgesehen sind.

Die Erfindung ist nicht auf das gezeigte Ausführungsbeispiel begrenzt; sie umfasst sämtliche Ausgestaltungen eines Differentials, insbesondere die Größenverhältnisse von Differentialkorb und Differentialdeckel, die unter den Schutzumfang der vorliegenden Ansprüche fallen, ohne die Vorteile eines Differentials, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Differential
- 2: Differentialkorb
- 3: Aussparung
- 4: Segment
- 5: Differentialdeckel
- 6: Tellerrad
- 7: Radialschweißnaht
- 7': Radialschweißnaht

## Patentansprüche

1. Differential für eine Fahrzeugachse, umfassend einen Differentialkorb (2) und einen Differentialdeckel (5), die mit einem Tellerrad (6) oder Stirnrad verbunden sind, wobei der Differentialkorb (2) mit dem Differentialdeckel (5) und dem Tellerrad (6) oder Stirnrad über eine Radialschweißnaht (7, 7') verbunden ist, **dadurch gekennzeichnet, dass** der Differentialkorb (2) oder der Differentialdeckel (5) an seinem Umfang im Flanschbereich einer Tellerrad- oder Stirnradanlage Aussparungen (3) aufweist, in die Segmente (4) des Differentialdeckels (5) bzw. des Differentialkorbs (2) eingreifen, so dass der Differentialkorb (2) und der Differentialdeckel (5) mit dem Tellerrad (6) oder Stirnrad zur Anlage kommen wodurch der Differentialkorb (2) mit dem Differentialdeckel (5) und dem Tellerrad (6) oder Stirnrad mit der Radialschweißnaht (7, 7') verbindbar ist.

2. Differential für eine Fahrzeugachse nach Anspruch 1, **dadurch gekennzeichnet, dass** die Radialschweißnaht (7, 7') mittels Laserschweißtechnik durchführbar ist.

3. Differential für eine Fahrzeugachse nach Anspruch 1 oder 2, **dadurch gekennzeichnet, dass** die Segmente (4) und Aussparungen (3) gießtechnisch ohne mechanische Bearbeitung hergestellt sind.

4. Differential für eine Fahrzeugachse nach Anspruch 1, 2 oder 3, **dadurch gekennzeichnet, dass** die Anzahl der Segmente (4) und Aussparungen (3) unter Berücksichtigung von Rahmenbedingungen, die von der Festigkeitsbetrachtung und der Schweißtechnik abhängen können, beliebig wählbar ist.

## Claims

1. Differential for a vehicle axle, comprising a differential cage (2) and a differential cover (5) which are connected to a ring gear (6) or spur gear, the differential cage (2) being connected to the differential cover (5) and the ring gear (6) or spur gear via a radial welded seam (7, 7'), **characterized in that** the differential cage (2) or the differential cover (5) has cut-outs (3) on its circumference in the flange region of a contact with the ring gear or spur gear, into which cut-outs (3) segments (4) of the differential cover (5) or the differential cage (2) engage, with the result that the differential cage (2) and the differential cover (5) come into contact with the ring gear (6) or spur gear, as a result of which the differential cage (2) can be connected to the differential cover (5) and the ring gear (6) or spur gear by way of the radial welded seam (7, 7').

2. Differential for a vehicle axle according to Claim 1, **characterized in that** the radial welded seam (7, 7') can be produced by means of laser welding technology.

3. Differential for a vehicle axle according to Claim 1 or 2, **characterized in that** the segments (4) and cut-outs (3) are produced using casting technology without machining.

4. Differential for a vehicle axle according to Claim 1, 2 or 3, **characterized in that** the number of segments (4) and cut-outs (3) can be selected as desired, under consideration of basic conditions which can depend on the consideration of strength and the welding technology.

## Revendications

1. Différentiel pour un essieu de véhicule, comprenant une coquille de différentiel (2) et un couvercle de différentiel (5), qui sont connectés à une couronne de différentiel (6) ou à un pignon, la coquille de différentiel (2) étant connectée au couvercle de différentiel (5) et à la couronne de différentiel (6) ou au pignon par le biais d'un joint de soudure radial (7, 7'), **caractérisé en ce que** la coquille de différentiel (2) ou le couvercle de différentiel (5) présente sur sa périphérie, dans la région de la bride d'une installation de couronne de différentiel ou de pignon, des évidements (3) dans lesquels s'engagent des segments (4) du couvercle de différentiel (5) ou de la coquille de différentiel (2), de sorte que la coquille de différentiel (2) et le couvercle de différentiel (5) viennent en butée avec la couronne de différentiel (6) ou le pignon, par lequel la coquille de différentiel (2) peut être connectée au couvercle de différentiel (5) et à la couronne de différentiel (6) ou au pignon par le joint de soudure radial (7, 7').

2. Différentiel pour un essieu de véhicule selon la revendication 1, **caractérisé en ce que** le joint de soudure radial (7, 7') peut être réalisé par une technique de soudage au laser.

3. Différentiel pour un essieu de véhicule selon la revendication 1 ou 2, **caractérisé en ce que** les segments (4) et les évidements (3) sont fabriqués par une technique de moulage sans usinage mécanique.

4. Différentiel pour un essieu de véhicule selon la revendication 1, 2 ou 3, **caractérisé en ce que** le nombre des segments (4) et des évidements (3) peut être sélectionné de manière quelconque en tenant compte des conditions cadres, qui peuvent dépendre de la solidité envisagée et de la technique de soudage.
